# EUROPÄISCHE PATENTSCHRIFT

(11) **EP 1 274 297 B1**
(45) Veröffentlichungstag und Bekanntmachung des Hinweises auf die Patenterteilung: **31.05.2006**
(21) Anmeldenummer: 01929569.0
(22) Anmeldetag: 17.04.2001
(51) Int. Cl.: A01J 5/08

(54) **ZITZENGUMMI**
TEAT RUBBER
CAOUTCHOUC POUR TRAYON

(30) Priorität: 14.04.2000 DE 10018870
(43) Veröffentlichungstag der Anmeldung: 15.01.2003
(73) Patentinhaber: Lincke, Kathrin, 86842 Türkheim (DE)
(72) Erfinder: Lincke, Kathrin, 86842 Türkheim (DE)
(74) Vertreter: Thalmeir, Anton
(86) Internationale Anmeldenummer: PCT/EP2001/004350
(87) Internationale Veröffentlichungsnummer: WO 2001/078500

(56) Entgegenhaltungen:
- DE-A- 19 812 573
- DE-B- 2 941 150
- US-A- 2 531 266
- US-A- 4 249 481

## Beschreibung

Die vorliegende Erfindung betrifft einen Zitzengummi für eine im wesentlichen unverformbare Melkbecherhülse zur Bildung eines Zweiraum-Melkbechers, mit dem durch ein Melkvakuum im Saugtakt Milch aus einer Zitze gemolken und im Entlastungstakt die Zitze massiert wird.

### STAND DER TECHNIK

Der Zitzengummi bildet bei einer Melkmaschine die Kontaktstelle zwischen der Melkmaschine und dem zu melkenden Tier und stellt daher einen wesentlichen, aber nicht einfach auszulegenden Teil der Melkmaschine dar. Eine besondere Schwierigkeit liegt in der Auslegung des Kopfteils mit der Kopflochöffnung des Zitzengummis, der mehrere Aufgaben lösen muß: Die Kopflochöffnung bzw. Einführöffnung für die Zitze muß sich an die verschiedenen Zitzenformen und -größen, Zitzenstellungen und -zustände gut anpassen, um das unter den Zitzen anliegende Melkvakuum gegen den Umgebungsdruck abdichten zu können. Dabei dürfen die Zitzen jedoch nicht abgeschnürt werden, da es bei Einschränkung der Blutzirkulation in der Zitzenhaut zu Schmerzen und Schwellungen kommt. Geschieht dies, verschlechtert sich durch die Verspannung der Eutermuskulatur der Ausmelkgrad der Euter, verlängert sich die Melkzeit und erhöht sich das Nachgemelk.

Im Bereich des Fürstenbergschen Venenrings am Übergang von der Zitze zum Euterboden befinden sich besonders viele Blut- und Lymphgefäße. Da dieser Bereich schon im natürlichen Zustand als Infektionsbarriere eine Engstelle darstellt, besteht die Gefahr einer Beeinträchtigung des Milchabflusses, wenn es hier durch harte Zitzengummis mit engen Einführöffnungen zu Abschnürungen der Blut- und Lymphgefäße kommt, was zum Zuschwellen der Engstelle führt. Um diese zugeschwollene Engstelle überwinden und die restliche Milch gewinnen zu können, muß das Melkzeug oder die einzelnen Melkbecher nach unten belastet werden. Dieser als Nachmelken bezeichnete Vorgang erfordert zusätzliche Arbeitszeit oder aufwendige maschinelle Vorrichtungen und verlängert den Melkprozeß erheblich. Die Belastung des Zitzengewebes ist während dieser Zeit besonders hoch, weil nur wenig Milch fließt und dementsprechend das höchste Melkvakuum auf die Zitzen wirkt. Zitzenschäden mit anschließenden Eutergesundheitsproblemen sind die Folge.

Ein wesentliches Qualitätskriterium für Zitzengummis besteht also auch darin, wie gut der Zitzengummi den Melkbecher in optimaler Melkposition noch unterhalb des Fürstenbergschen Venenrings hält, obwohl durch das anliegende Melkvakuum ein stetiger Sog auf die Zitzen ausgeübt wird.

Bei den bekannten Zitzengummis für Zweiraum-Melkbecher für Saugmelkverfahren schließt sich an das dem Euter zugewandte Ende eines Schlauchteils aus folgendem Grund ein Kopfteil an. Der als Schaft bezeichnete Schlauchteil wird in einen unverformbaren Melkbecher koaxial zu letzterem so eingespannt, daß sich zwischen dem Schaft und dem Melkbecher ein abgeschlossener Ringraum bildet, der in Verbindung zu einem Pulsator steht. Je nach Melkprinzip wird nun mit Hilfe des Pulsators dieser Raum abwechselnd im Saugtakt mit Vakuum und im Entlastungstakt mit atmosphärischer Luft oder auch mit einem Überdruck beaufschlagt. In jedem Fall bildet sich zwischen dem Innenteil des Schaftes, in dem sich beim Melken die Zitze befindet, und dem Ringraum eine Druckdifferenz, durch die das Schlauchteil zusammengefaltet wird. Der daraus resultierende Druck auf die Zitze massiert das vom Melkvakuum mit angesaugte Blut und die Gewebsflüssigkeit aus der Zitzenspitze zurück. Um im Saugtakt den Schließmuskel der Zitzen aufdehnen zu können, muß der unter Vakuum stehende Raum im Querschnitt etwas größer als die Zitze sein. Deshalb liegt das sich ständig faltende und vom höheren Vakuum im Ringraum zum Teil auch zusätzlich überdehnte Schlauchteil nur unzureichend dicht an der Zitze an und ermöglicht nur eine sehr schlechte Haftung an der Zitze. Aus diesem Grund bedarf es eines zusätzlichen Dichtelementes auf der dem Euter zugewandten Seite des Zitzengummischaftes, der allgemein als Zitzengummikopf bezeichnet wird.

Es sind Ausführungen von Zitzengummiköpfen bekannt, bei denen die Einführöffnungen für die Zitzen als Ringlippen ausgebildet sind. In der DE 196 23 386 A1 wird ein Beispiel beschrieben, bei dem die Ringlippe mit einem zusätzlichen Schlauchteil versehen ist, um die Auflagefläche auf die Zitzen zu vergrößern und daher den Auflagedruck zu verringern. Dieser Schlauchteil ist jedoch in seinem Durchmesser nur in geringem Maß veränderbar.

Andere Beispiele werden u.a. in DE 29 41 150 C2 und DE 196 35 719 A1 beschrieben. Wenn diese Zitzengummis mit der relativ schmalen Dichtlippe aus hartem Material hergestellt werden, dichten sie zwar gut, drücken sich jedoch besonders in dickere Zitzen ein, schnüren diese damit ab und verengen den Bereich des Fürstenbergschen Venenrings am Übergang von der Zitze zum Euterboden. Sie sind somit hinsichtlich ihrer physiologischen Eigenschaften oft nicht zufriedenstellend und haben nur eine begrenzte Anpassungsfähigkeit an unterschiedliche Zitzengrößen. Weisen diese Zitzengummis weiche und flexible Ringlippen auf, können sie sich zwar gut an die Zitzen anpassen, es kommt jedoch leichter zu Lufteinbrüchen. Daher haften sie auch schlechter und fangen somit frühzeitig an, an der Zitze hochzuklettern oder abzurutschen. Außerdem unterliegen insbesondere dünnwandige, weiche Zitzengummiköpfe einem hohen Verschleiß.

Die Zeichnungen in der DE 38 10 160 A1 und der DE 198 12 573 A1 zeigen Zitzengummis, deren Kopfteil jeweils als übergangslose Fortsetzung des Schlauchteils ausgebildet ist. In beiden Ausführungen fehlt zwar eine dichtende Ringlippe, jedoch ist kein geschlossener, vom Pulsraum unabhängiger Ringraum beschrieben, der in der Lage wäre, sich an unterschiedliche und vor allem kleinere Zitzengrößen anzupassen.

Keiner der beiden vorgenannten Druckschriften ist nämlich etwas hinsichtlich der Ausgestaltung des dargestellten Kopfteils zu entnehmen, schon gar nicht zu dessen Funktionsweise oder dessen Bedeutung für die Dichtigkeit des Zitzengummis: Die DE 38 10 160 A1 ist darauf gerichtet, zyklische Schwankungen des Unterdrucks im Melkzeug durch ein speziell angesteuertes Regelventil auszugleichen. Der Kopfteil ist so dargestellt, daß das obere Ende des Schaftteils nach außen umgestülpt und unterhalb mit der Außenseite des Schaftteils verbunden ist oder auch nur anliegt. Die Umstülpung liegt am Übergangsbereich von der Zitze in das Euter an und befindet sich bezüglich des Schaftteils weiter radial außen. Dagegen will die DE 198 12 573 A1 ein Melkzeug schaffen, das ohne Pulsator auskommt. Dies wird erreicht durch Vorsehen einer direkten Verbindungsleitung zwischen einem der Pulsräume des Melkzeugs und einem Unterdruckbereich des Melkzeugs sowie eines in der Verbindungsleitung liegenden Schaltventils, das in der Saugstellung die Verbindungsleitung freigibt und in der Entlastungsstellung die Verbindungsleitung drosselt, wobei in der Entlastungsstellung der Pulsraum mit einer Druckgasquelle verbunden ist. Der Kopfteil ist ebenfalls als Umstülpung des oberen Endes des Schaftteils nach außen dargestellt, die unterhalb mit der Außenseite des Schaftteils verbunden ist. Dessen lichte Weite ist größer als die größte lichte Weite des Schaftteils.

In der Druckschrift US 4,249,481 ist ein Zitzengummi mit einem als Ringschlauch ausgebildeten oberen Ende beschrieben. Der die Zitze umschließende Schlauchteil des beschriebenen Zitzengummis ist doppelwandig, wobei die so entstehende Ringkammer am euterseitigen Ende in einem radial nach außen etwas vergrößertem Ringraum endet, der mit einem Anschlußteil für die abwechselnde Versorgung mit Druck und Vakuum versehen ist. Dieser Zitzengummi ist dazu vorgesehen, die Milch aus der Zitze zu drücken. Da der Ringraum der Beschreibung nach vakuumstabil sein muß, kann er nicht sehr groß und weich ausgeführt werden, was einer guten Anpassungsfähigkeit an die Zitze widerspricht.

Die EP 266 809 B1 offenbart einen für ein Druckmelkverfahren eingesetzten Zitzengummi, bei dem das Melken von Hand als Vorbild dient. Die Dichtlippe weist hier einen nach innen und unten umgestülpten Fortsatz auf. Das untere Ende des Fortsatzes wird von innen mit Hilfe eines festen Ringes an das obere Ende eines Schlauchteils angedrückt, um mit diesem Schlauchteil eine dichte Verbindung zu bilden, was im milchführenden Bereich aus hygienischer Sicht bedenklich sein kann. Dadurch wird ein die Zitze umschließender Ringraum gebildet, der mit dem Raum zwischen Melkbecherhülse und Schlauchteil verbunden ist. Diese Räume werden in verschiedenen Melktakten abwechselnd mit Druckluft und Vakuum beaufschlagt. Dadurch drückt der Fortsatz in einem Takt auf die Zitze und preßt somit die Milch aus der Zitze und dehnt im anderen Takt die Zitze, damit wieder Milch in die Zitze nachfließen kann. Dieser - dem Euter zugewandte - Ringraum hat also eine Melkfunktion. Die Funktion der Abdichtung gegenüber der Zitze übernimmt deshalb der stärker ausgebildete obere, an der Zitze anliegende Teil des Ringraums, d.h. die Dichtlippe. Mit einem derartigen Druckmelkverfahren kann keine ausreichend hohe Melkgeschwindigkeit erzielt werden. Außerdem werden die Zitzen langfristig geschädigt.

Der vorliegenden Erfindung liegt die Aufgabe zugrunde, für einen Zweiraum-Melkbecher für Saugmelkverfahren einen verschleißarmen Zitzengummi zu schaffen, der auch bei sehr verschiedenen Zitzengrößen und niedrigem Melkvakuum noch sehr gut haftet, keine Lufteinbrüche verursacht und auch bei geringem Melkzeuggewicht nicht frühzeitig klettert, dabei die Zitzen jedoch nicht abschnürt und somit ein Ermelken nahezu der gesamten zur Verfügung stehenden Milch ermöglicht, ohne daß dafür zusätzliche Nachmelkarbeiten erforderlich sind.

Diese Aufgabe wird erfindungsgemäß mit einem Zitzengummi nach dem Anspruch 1 gelöst. Vorteilhafte Weiterbildungen der Erfindung sind Gegenstand der Unteransprüche.

Wenn der erfindungsgemäße Zitzengummi auf eine Zitze aufgesteckt wird, die wesentlich dicker als die lichte Weite des Ringschlauchs ist, wird der elastische Ringschlauch von der Zitze aufgeweitet und verlängert sich in seiner Axialrichtung. Durch die Aufweitung und die Axialverlängerung wird die an der Zitze anliegende Fläche des Ringschlauchs vergrößert, was zum einen die Dichtwirkung erhöht und zum anderen den Druck auf die Zitze klein hält. Falls der erfindungsgemäße Zitzengummi auf eine Zitze aufgesteckt wird, die nur geringfügig dicker als die lichte Weite des Ringschlauchs ist, führt das im Schaftteil permanent anliegende Melkvakuum dazu, daß der Ringschlauch nach radial innen und unten gezogen wird und dieser sich dadurch an die Zitze abdichtend anlegt. Auch hierdurch wird eine große und damit schonende Anlagefläche des Zitzengummis an der Zitze erzielt. Der Effekt des Melkvakuums tritt selbstverständlich auch bei dicken Zitzen ein. Bei schrägstehenden oder unregelmäßig geformten Zitzen kann sich der Ringschlauch in nicht-rotationssymmetrischer Weise verformen und sich deshalb weich und dichtend an die vorhandene physiologisch gegebene Geometrie anpassen. Somit paßt sich der erfindungsgemäße Zitzengummi den verschiedensten Zitzenformen problemlos an. Er kompensiert des weiteren durch selbsttätige Verkleinerung der lichten Weite des Zitzengummis automatisch, daß die Zitze im Verlauf des Melkvorgangs immer schlaffer wird, und verhindert damit Lufteinbrüche. In anderen Worten dient der Ringschlauch immer der Abdichtung und nie zum Melken selbst. Außerdem wird durch die Auslegung des dichtenden Teils des erfindungsgemäßen Zitzengummis als Ringschlauch ein häufiges Auf- und Überdehnen und daraus resultierende dauerhafte Verformung des Kopfteils - wie es bei einer Dichtlippe der Fall ist - vermieden, was zu längeren Betriebszeiten und damit verbesserter Wirtschaftlichkeit führt.

### KURZE BESCHREIBUNG DER ZEICHNUNGEN

Weitere Vorteile, Merkmale und Besonderheiten der Erfindung ergeben sich aus der nachfolgenden Beschreibung von bevorzugten, jedoch nicht beschränkenden Ausführungsformen der Erfindung anhand der schematischen und nicht maßstabsgetreuen Zeichnungen. Es zeigen:
- Fig. 1: eine Schnittansicht einer ersten Ausführungsform des erfindungsgemäßen Zitzengummis mit Anschlußkanal zum Ringschlauch,
- Fig. 2: eine Schnittansicht einer zweiten Ausführungsform des erfindungsgemäßen Zitzengummis mit eingeführter dünner Zitze in der Saugphase,
- Fig. 3: eine Schnittansicht einer zweiten Ausführungsform des erfindungsgemäßen Zitzengummis mit eingeführter dicker Zitze in der Saugphase,
- Fig. 4: eine Schnittansicht einer dritten Ausführungsform des erfindungsgemäßen Zitzengummis mit einem als Doppel-Wulst ausgebildeten Ringschlauch,
- Fig. 5: eine Schnittansicht einer vierten Ausführungsform des erfindungsgemäßen Zitzengummis mit einem Gelenk im Bereich des Halterands,
- Fig. 6: eine Schnittansicht einer fünften Ausführungsform des oberen Teils des erfindungsgemäßen Zitzengummis mit zusätzlichen Halterippen,
- Fig. 7: eine Schnittansicht einer sechsten Ausführungsform des erfindungsgemäßen Zitzengummis mit aufklappbarem Ringschlauch, und
- Fig. 8: eine Schnittansicht einer siebten Ausführungsform des erfindungsgemäßen Zitzengummis mit aufklappbarem, in Axialrichtung verstellbarem Ringschlauch.

### AUSFÜHRLICHE BESCHREIBUNG DER BEVORZUGTEN AUSFÜHRUNGSFORMEN

Zur Erleichterung der weiteren Erläuterung beziehen sich Richtungs- und Orientierungsangaben bei den hier dargestellten Zitzengummis auf die Lage, in der sich ein Zitzengummi befindet, wenn er auf die Zitze aufgesteckt ist. Dabei ist der oben in den Figuren dargestellte Teil der dem Euterboden zugewandte, dementsprechend schließt sich an den unten dargestellten Teil der zum Milchsammelbehälter führende Teil der Melkanlage an.

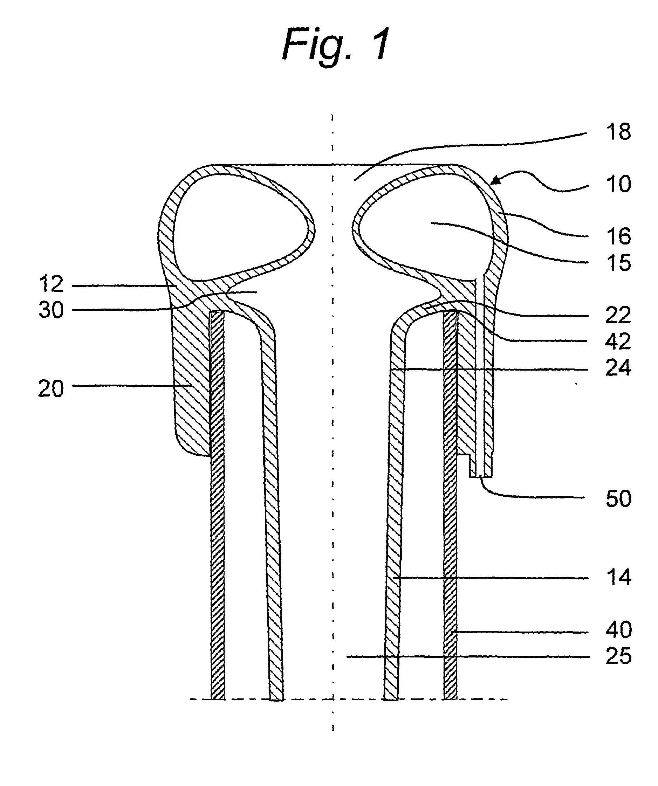

Unter Bezugnahme auf die Fig. 1 soll zunächst eine erste vorteilhafte Ausführungsform der Erfindung beschrieben werden. Ein Zitzengummi 10 setzt sich im dargestellten Beispiel zusammen aus einem Schaftteil 14, einem Halterand 20 zum Aufstecken auf eine Melkbecherhülse 40, einem Übergangsteil 22, der den oberen Rand 24 des Schaftteils 14 im Bereich des oberen Rands 42 der Melkbecherhülse 40 mit dem Halterand 20 verbindet, und einem Kopfteil 12, der ebenfalls im Bereich des oberen Rands 42 der Melkbecherhülse 40 sowohl mit dem Übergangsteil 22 als auch mit dem Halterand 20 verbunden ist. Diese Bestandteile sind als Teil des Melkbecherinnenraums dicht miteinander verbunden, was schon aus hygienischen Gründen unerläßlich ist. Das Melkvakuum liegt im Inneren 25 des Schaftteils 14 vor. Der Zitzengummi ist - bis auf später noch zu beschreibende Details - rotationssymmetrisch zu seiner Längsachse und wird von oben in die Melkbecherhülse 40 eingesetzt, wobei der Halterand über deren oberen Rand 42 gestülpt ist. Es ist auch möglich, den Zitzengummi ohne Halterand 20 herzustellen, wobei dann eine andere Art der Befestigung an der Melkbecherhülse eingesetzt wird, beispielsweise durch Einstecken im Preßsitz.

Der Kopfteil 12 ist als zum Schaftteil 14 koaxialer Ringschlauch 16 ausgebildet, der eine Einführöffnung 18 für eine Zitze Z definiert und je nach Einsatzzweck oder angestrebter Anpassung verschiedene Formen aufweisen kann. Die lichte Weite des in Fig. 1 gezeigten Ringschlauchs 16 ist wesentlich kleiner als die maximale lichte Weite des Schaftteils 14, sie kann jedoch auch nahezu gleich groß wie letztere sein. Für den Fall, daß die lichte Weite des Ringschlauchs im unverformten Zustand größer als die maximale lichte Weite des Schaftteils ist, muß der Ringschlauch so beschaffen sein, daß seine lichte Weite zumindest in der Saugphase kleiner als die maximale lichte Weite des dann aufgeweiteten Schaftteils ist. Der Ringschlauch 16 ist geschlossen, so daß das Volumen des von ihm umschlossenen Innenraums 15 - von Kompression aufgrund von Formänderungen abgesehen - im wesentlichen konstant bleibt. Bei dieser Ausführungsform ist der Ringschlauch mit Luft unter einem bestimmten Druck gefüllt.

Es ist vorteilhaft, wenn der Ringschlauch 16 eine Öffnung 50 aufweist, die in diesem Beispiel auch den Halterand 20 durchsetzt (hier rechts dargestellt). Eine derartige Öffnung 50 kann aber auch beispielsweise den Ringschlauch 16 in radialer Richtung durchsetzend ausgebildet sein. Mittels dieser Öffnung 50 kann der Innenraum 15 mit Druck beaufschlagt oder mit einem geeigneten Stoff befüllt werden. Dadurch kann die Steifigkeit bzw. die Nachgiebigkeit und damit das Anpassungsvermögen sowie bei entsprechender Formung des Ringschlauchs 16 dessen Form, insbesondere dessen lichte Weite, variiert werden. So kann beispielsweise im Verlauf des Melkvorgangs, wenn die Zitze schlaffer zu werden beginnt, durch Druckerhöhung im Innenraum 15 die lichte Weite des Ringschlauchs 16 und gegebenenfalls der Anpreßdruck des Ringschlauchs 16 an der Zitze erhöht und damit die Gefahr von Lufteinbrüchen beseitigt werden. Ein weiterer Vorteil einer derartigen Konfiguration besteht darin, daß mittels Druckänderungen im Innenraum 15 Vibrationen erzeugt werden können, die eine Stimulationswirkung auf die Zitze und das Euter ausüben. Derartige Druckänderungen werden üblicherweise mit einem als Pulsator bezeichneten Steuergerät erzeugt.

Der Innenraum 15 kann statt mit Luft auch mit einem anderen Gas, einer Flüssigkeit (hier ist selbstverständlich auch Wasser möglich) sowie einer Masse, die ein Gel oder einen Schaum bildet, gefüllt sein. Falls keine Öffnung 50 vorgesehen ist, kann der Innendruck des Füllstoffs bei der Herstellung so gewählt werden, daß der Ringschlauch eine bestimmte Form einnimmt. Dies ist besonders dann gut möglich, wenn die Wände des Ringschlauchs relativ dünn sind und der Innenraum 15 mit einem Gel gefüllt ist.

Der Ringschlauch 16 muß aber nicht geschlossen sein, d.h., es kann beispielsweise die Öffnung 50 unverschlossen sein. In diesem Fall ist für die Herstellung des Ringschlauchs 16 ein solches Material in geeigneten Wandstärken zu verwenden, daß der Ringschlauch 16 seine Form selbständig ohne Unterstützung eines Innendrucks hält.

Der untere Teil des Ringschlauchs 16 und der Übergangsteil 22 definieren zwischen sich einen Hohlraum 30, dessen Funktion später beschrieben wird.

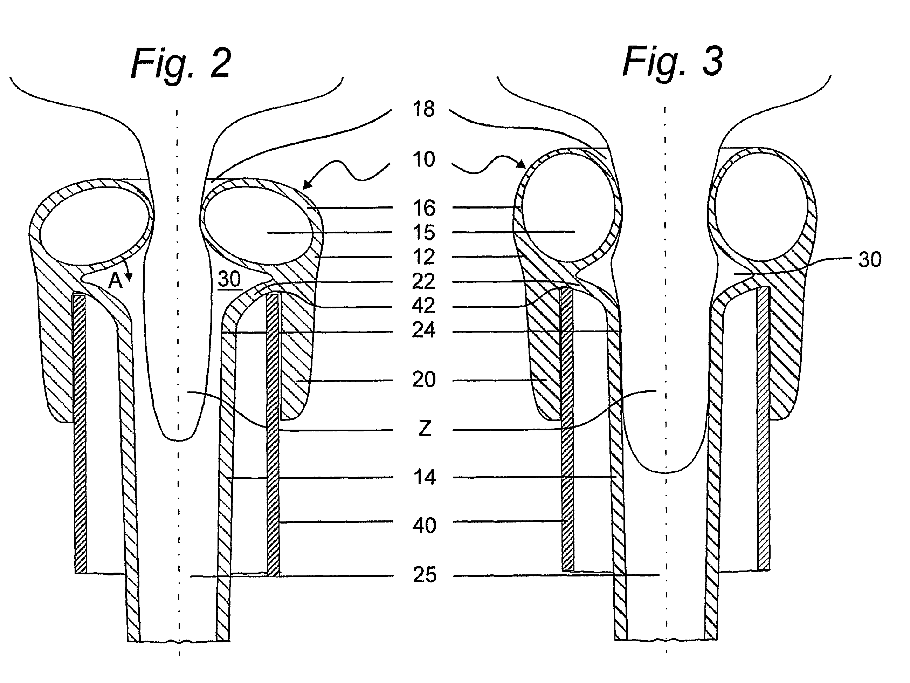

In den Fig. 2 bis 8 sind weitere Ausführungsformen beschrieben. Teile, die bereits in Fig. 1 dargestellt und beschrieben wurden, sind mit den gleichen Bezugszeichen versehen und werden nicht erneut erläutert. Auch die übrigen Ausführungen zur ersten Ausführungsform hinsichtlich Ausgestaltung und Funktion gelten - sofern nicht anders angegeben - für alle weiteren Ausführungsformen.

In den Fig. 2 und 3 ist nebeneinander dargestellt, wie sich der Ringschlauch 16 des Zitzengummis gemäß einer zweiten Ausführungsform durch Einführen einer dünnen bzw. dicken Zitze Z verformt und an diese anpaßt. Unmittelbar nach Einführen einer dünnen Zitze Z in einen Kopfteil 12 mit nur geringfügig engerem Ringschlauch 16 liegt dieser nur mit geringem Druck an der Zitze Z an. Der Ringschlauch 16 wird dabei von der Zitze Z etwas nach radial außen gedrückt und in Axialrichtung verändert. Dadurch vergrößert sich dessen Anlagefläche an der Zitze Z und damit auch dessen Dichtverhalten. Diese Vergrößerung der Anlagefläche kann bei einer Ausführungsform, bei der keine Öffnung im Ringschlauch 16 vorgesehen ist, durch geeignete Wahl des im Innenraum 15 des Ringschlauchs 16 bei dessen Herstellung erzeugten Innendrucks gesteuert werden. Das im Schaftteil 14 vorhandene Melkvakuum übt im ganzen Hohlraum 30 aufgrund des Außendrucks eine nach unten gerichtete Kraft (durch den Pfeil A angedeutet) auf den Ringschlauch 16 aus und zieht diesen daher nach unten. Auch hierdurch wird der Anpreßdruck des Ringschlauchs 16 erhöht und die Anlagefläche vergrößert. Diese Situation ist in Fig. 2 dargestellt.

Aus Fig. 3 ist ersichtlich, daß beim Einführen einer dickeren Zitze der Ringschlauch 16 stärker nach radial außen und in Axialrichtung verformt wird. Selbstverständlich ergibt sich in diesem Fall eine höhere Anpreßkraft als beim Einführen einer dünneren Zitze, die jedoch nicht wie bei herkömmlichen Zitzengummis dazu führt, daß die Zitze eingeschnürt wird, sondern sich durch die Verformung in etwa gleichmäßig auf eine größere Fläche verteilt, wodurch der Anpreßdruck reduziert wird. Aus der Zusammenschau der Fig. 2 und 3 wird deutlich, daß der erfindungsgemäße Zitzengummi eine sehr große Spannbreite hinsichtlich der Zitzengrößen bietet, bei denen er eingesetzt werden kann. Gemäß der Darstellung in Fig. 3, die den Saugzustand wiedergibt, liegt die dicke Zitze eng am Schaftteil 14 an und scheint somit den Hohlraum 30 gegenüber dem unter der Zitze anliegenden Melkvakuum abzudichten. Zum einen ist es jedoch nicht so, daß der Schaftteil 14 in der Saugphase mit seinem ganzen Umfang dicht an der Zitze anliegt, sondern es können sich hier durchaus Falten bilden, über die die Verbindung zum Hohlraum 30 hergestellt wird. Zum anderen bilden sich derartige Falten üblicherweise beim Übergang in die Entlastungsphase, so daß die in Verbindung mit Fig. 2 beschriebene, nach unten gerichtete Kraft auch bei dicken Zitzen auf den Ringschlauch 16 wirkt.

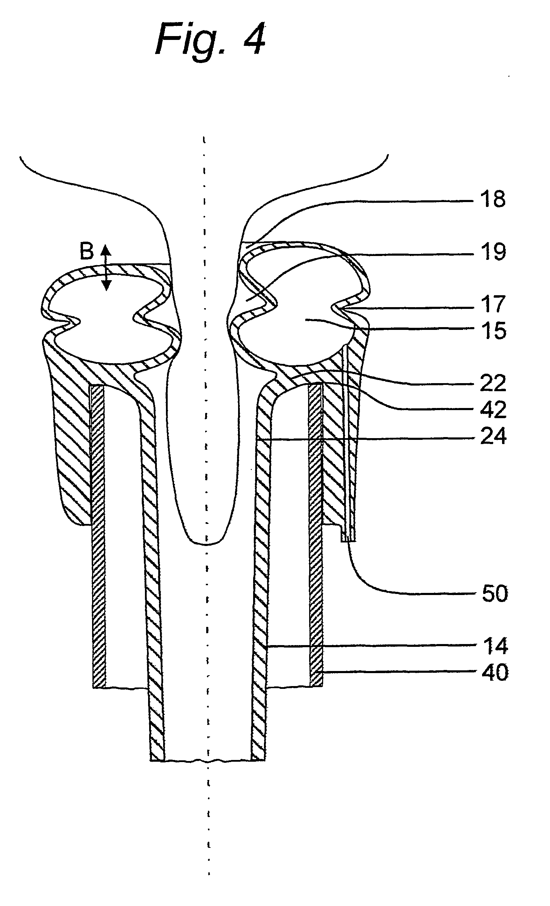

Fig. 4 zeigt eine dritte Ausführungsform, bei der der Ringschlauch 16 durch Vorsehen einer radial außen gelegenen Einschnürung 17 und einer radial innen gelegenen Einschnürung 19 als Doppel-Wulst ausgebildet ist. Die Einschnürungen 17, 19 bilden Federgelenke, mittels derer die axiale Länge des Ringschlauchs 16 veränderbar ist, wie durch den Doppelpfeil B in der linken Zeichnungshälfte angedeutet ist, die einen im Vergleich zur rechten Zeichnungshälfte komprimierten Zustand zeigt. An den Federgelenken kann der Ringschlauch 16 außerdem aus der Axialrichtung verschwenkt werden. Eine derartige Verschwenkbarkeit ist insbesondere dann vorteilhaft, wenn der Zitzengummi an eine vom Euter nicht senkrecht nach unten, sondern schräg abstehende Zitze aufgesetzt wird. Das Verschwenken verhindert, daß die Einführöffnung 18 derart schräg an der Zitze anzuliegen kommt, daß aufgrund der Schräglage Lufteinbrüche resultieren. Es ist klar, daß auch mehrere derartige Einschnürungen vorgesehen werden können, die nicht unbedingt alle paarweise wie im obigen Beispiel angeordnet sein müssen. Zusätzlich können das oder die Federgelenke so ausgelegt sein, daß bei Anlegen von Druckänderungen verstärkte vertikale Bewegungen des gesamten Melkbechers hervorgerufen werden, die eine zusätzliche Stimulation und Tonuslockerung der Muskulatur bewirken. Ein ähnliches doppelseitiges Federgelenk ist aus der eingangs genannten Druckschrift DE 196 35 719 A1 bekannt. Allerdings begrenzt dort das Federgelenk eine Verlängerung des Raumes zwischen Schlauchteil und fester Melkbecherhülse, die somit zwangsläufig von den pulsatorgesteuerten Druckänderungen, die die Saug- und Entlastungsphase definieren, abhängig ist. Das beschriebene Federgelenk begrenzt keinen Ringschlauch, der als Dichtelement an der Zitze anliegt und die Melkbecherposition an der Zitze bestimmt, sondern bewegt sich in etwa gleichsinnig zum Schlauchteil.

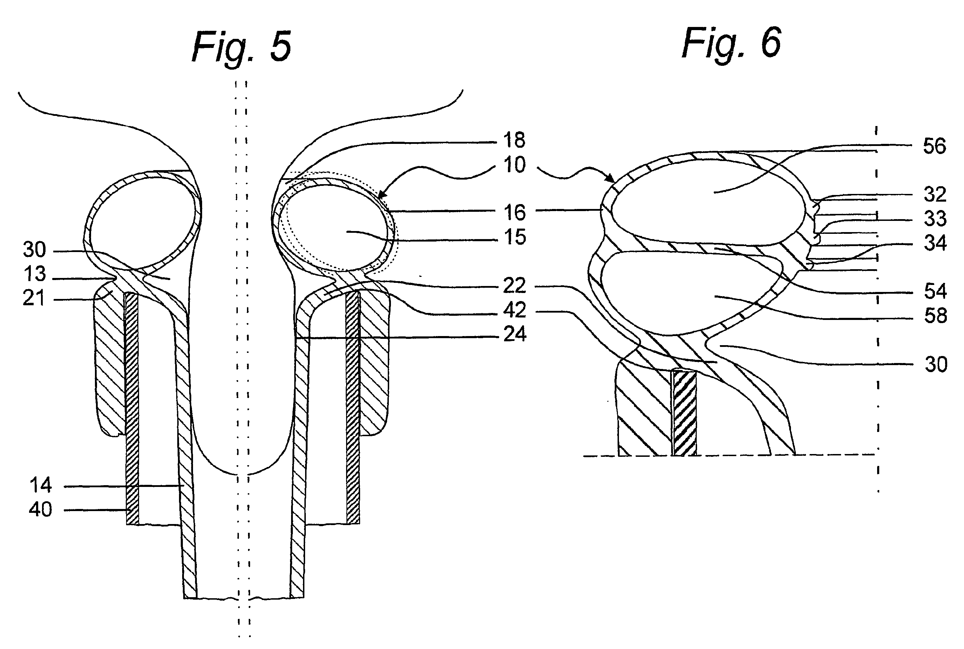

Wenn gemäß Darstellung in Fig. 5 der Kopfteil 12 radial außen im Bereich des oberen Endes 42 der Melkbecherhülse 40 bzw. im Bereich des oberen Endes 21 des Halterands 20 eine der Einschnürung 17 ähnliche Aussparung 13 aufweist, die in einer zur Längsachse des Zitzengummis 10 im wesentlichen senkrechten Ebene in Umfangsrichtung des Ringschlauchs 16 verläuft, kann der Ringschlauch 16 noch leichter nach radial außen und innen bewegt bzw. gekippt werden. Auch durch diese Aussparung 13 wird zusammen mit der durch den gegenüberliegenden Hohlraum 30 definierten Aussparung ein Federgelenk zum elastischen Verschwenken des Ringschlauchs 16 gebildet.

Insbesondere ein Kippen nach innen ist sehr wünschenswert, wenn dünne Zitzen gemolken werden oder die Zitze im Lauf des Melkvorgangs schlaffer wird und der Kopfteil 12 mit höherem Druck an der Zitze anliegen sollte. Die gepunktete Linie auf der rechten Seite von Fig. 5 deutet die Stellung des Ringschlauchs 16 vor dessen Kippen nach unten und innen an.

Fig. 6 zeigt eine weitere Ausführungsform. Der Ringschlauch 16 weist drei Ringlippen 32, 33, 34 auf, die auf seiner radial inneren Seite vorspringen und in einer zur Längsachse des Zitzengummis 10 im wesentlichen senkrechten Ebene in seiner Umfangsrichtung verlaufen. Diese Ringlippen, von denen auch mehr oder weniger als die gezeigten drei vorgesehen werden können, verbessern die Haftfähigkeit des Zitzengummis an der Zitze und verhindern ein Hochrutschen bzw. Klettern des Zitzengummis zum Euterboden hin.

Falls der Ringschlauch durch zwei oder mehr - beispielsweise in einer die Längsachse enthaltenden Ebene verlaufende - Querwände (in der Figur nicht dargestellt) in entsprechend viele Ringsegmente unterteilt ist, die über je eine Öffnung 50 separat mit Druck bzw. Druckänderungen unter Aufrechterhaltung des für die Abdichtung erforderlichen Mindestdrucks beaufschlagbar sind, kann bei wechselphasig getakteter Beaufschlagung eine schaukelnde Bewegung des Melkbechers verursacht und damit eine weitere Art der Massage und Stimulierung der Zitze ausgeführt werden. Es besteht gemäß Darstellung in Fig. 6 auch die Möglichkeit, eine Zwischenwand 54 vorzusehen, die in einer zur Längsachse des Zitzengummis 10 im wesentlichen senkrechten Ebene verläuft und den Ringschlauch in einen oberen Schlauchabschnitt 56 und einen unteren Schlauchabschnitt 58 unterteilt. Dann kann durch geeignete Taktung des Drucks in den Schlauchabschnitten immer ein Schlauchabschnitt zur Abdichtung und der jeweils andere zur Massage der Zitze eingesetzt werden. Selbstverständlich sind auch mehrere Zwischenwände möglich.

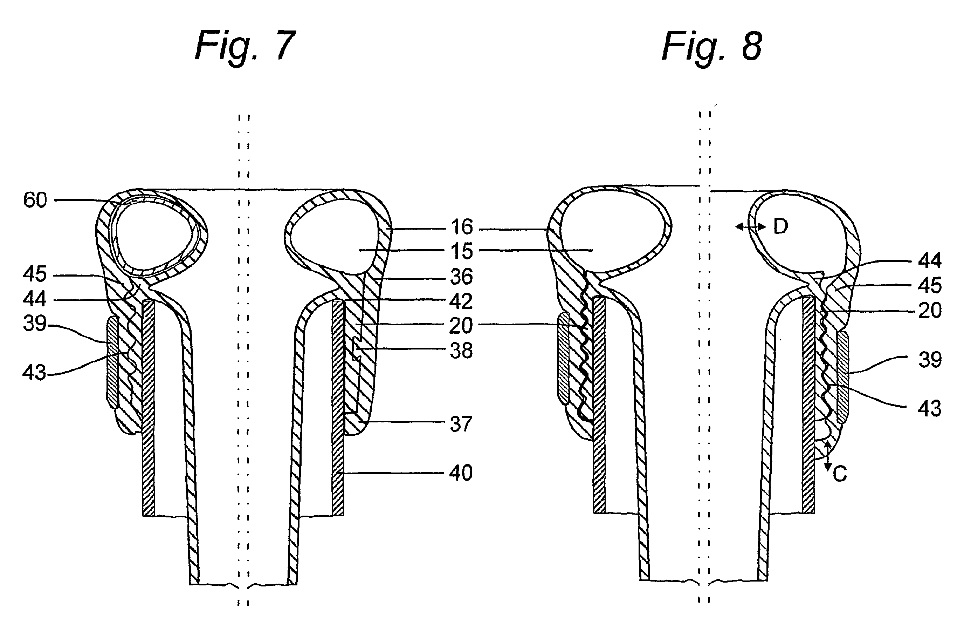

Fig. 7 zeigt einen Ringschlauch 16 gemäß einer weiteren Ausführungsform, der radial außen einen schlauchförmigen Ansatz 36 aufweist, der sich vom Bereich des oberen Endes 42 der Melkbecherhülse 40 bzw. vom oberen Ende 21 des Halterands 20 aus nach unten erstreckt und den Halterand 20 der Melkbecherhülse 40 zumindest über einen Teil von dessen axialer Länge dicht umschließt. Dabei ist die Wand des Ringschlauchs 16 über dessen gesamten Umfang symmetrisch zur Längsachse durchbrochen. Ein radial inneres Ende 44 und ein radial äußeres Ende 45 der Wand liegen aneinander und dichten den Innenraum 15 des Ringschlauchs 16 ab. Der Ansatz 36 ist mit dem radial äußeren Ende 45 der unterbrochenen Wand verbunden, und der Halterand 20 sowie der Übergangsteil 22 sind mit dem radial inneren Ende 44 der Wand verbunden. Dadurch kann der Ringschlauch 16 bei Hochziehen des Ansatzes 36 geöffnet bzw. aufgeklappt werden und bietet somit einen Zugang zum Innenraum 15, was insbesondere für eine vereinfachte Herstellung von Bedeutung sein kann.

Die oben beschriebene Öffenbarkeit des Ringschlauchs 16 kann des weiteren dazu genutzt werden, einen zusätzlichen Schlauch 60 in den Ringschlauch 16 einzusetzen, wie es in der linken Teilzeichnung von Fig. 7 gezeigt ist. Der Schlauch 60 ist dann zur Erhaltung seiner Formstabilität vorzugsweise mit Gas, einer Flüssigkeit, einem gel- oder schaumartigen oder einem anderen geeigneten viskosen Stoff gefüllt. Weil der Schlauch 60 selbst nicht in Kontakt mit der gemolkenen Milch kommen kann, bietet diese Doppel-Schlauchanordnung den Vorteil, daß für den Schlauch 60 beliebige, dichte Materialien verwendet werden können, die nicht für milchführende Teile geeignet sind. Dies kann Vorteile hinsichtlich der Produktionskosten oder aber der Dichtigkeit der gefüllten Schlauchanordnung bringen. Für den Ringschlauch 16 des Zitzengummis, der oft aus Silikon hergestellt ist, das zumindest gegenüber Luft nicht dauerhaft dicht ist, kann dagegen nur ein für milchführende Teile zulässiges Material verwendet werden, da ein Kontakt mit der Milch nicht ausgeschlossen werden kann.

Der Ansatz 36 trägt in dem in der rechten Teilzeichnung gezeigten Beispiel radial innen einen profilierten Ringvorsprung 38, der in eine entsprechende Ausnehmung im Halterand 20 eingreift und dadurch einen festen Verbund mit diesem sicherstellt. Außerdem weist der Ansatz 36 unten einen Umgriffsansatz 37 auf, der den Halterand 20 axial umgreift und damit die Verbindung und die Dichtigkeit zwischen den beiden letzteren noch verbessert. Bei Bedarf kann die Verbindung zwischen Halterand 20 und Umgriffsansatz 37 durch Ausreißen des Ringvorsprungs 38 aus der entsprechenden Ausnehmung gelöst werden. Zur Sicherung der Verbindung zwischen diesen beiden Teilen kann eine nur angedeutete Schelle 39 um den Ansatz 36 gelegt werden. Eine andere Möglichkeit, wie die aneinander anliegenden Flächen des Halterands 20 und des Ansatzes 36 beschaffen sein können, ist in der linken Teilzeichnung gezeigt: Jede Fläche besteht aus in Axialrichtung aneinandergereihten Ringwulsten 43, wobei jeweils ein Ringwulst des Halterands 20 komplementär zu einer entsprechenden Ringvertiefung im Ansatz 36 ist und umgekehrt.

Fig. 8 zeigt, wie die im linken Beispiel von Fig. 7 gezeigte Wulstanordnung bei geeigneter Auslegung genutzt werden kann: Wenn die Wulste gleichmäßig ausgebildet sind und auch der Umgriffsansatz 37 in das durch die Wulste gebildete Raster paßt, kann der Ansatz 36 in verschiedenen Höhen bzw. Axialpositionen am Halterand 20 fixiert werden. Damit kann eine Höhenverstellbarkeit der axialen Länge des Ringschlauchs erzielt werden, wie durch den Doppelpfeil C symbolisiert ist. Dabei kann bei entsprechender Auslegung des Ringschlauchs 16, insbesondere hinsichtlich des verwendeten Materials, der Wandstärke und der Gußform, auch die lichte Weite des Ringschlauchs 16 variiert werden, was durch den Doppelpfeil D dargestellt ist.

Die oben beschriebenen Zitzengummis sind nicht notwendigerweise nur aus Gummi hergestellt, sondern sie können auch aus Silikon oder anderen Elastomeren gebildet sein, die für den Einsatz in milchführenden Teilen geeignet sind.

Es versteht sich von selbst, daß die Erfindung nicht auf die vorstehend dargestellten und beschriebenen Ausführungsformen beschränkt ist. So kann beispielsweise die genaue Form des Ringschlauchs den praktischen Erfordernissen angepaßt oder die konstruktive Ausgestaltung einzelner Teile nach Maßgabe herstellungsbedingter Anforderungen vorgenommen werden. Es ist des weiteren festzuhalten, daß die unter Bezug auf einzelne Ausführungsformen beschriebenen Merkmale der Erfindung auch bei anderen Ausführungsformen vorhanden sein können, außer wenn es anders angegeben ist oder sich aus technischen Gründen von selbst verbietet. Als Beispiele hierfür seien die Ringlippen, die Unterteilung des Ringschlauchs oder das Vorsehen eines Schlauchs im Ringschlauch, die Öffenbarkeit und axiale Verstellbarkeit des Ringschlauchs sowie die Einschnürungen und Aussparungen genannt.

## Patentansprüche

1. Zitzengummi für eine im wesentlichen unverformbare Melkbecherhülse (40) zur Bildung eines Zweiraum-Melkbechers, mit dem im Saugmelkverfahren durch ein Melkvakuum in der Saugphase Milch aus einer Zitze (Z) gemolken und in der Entlastungsphase die Zitze massiert wird, wobei
der Zitzengummi einen zu seiner Längsachse im wesentlichen rotationssymmetrischen Kopfteil (12) sowie einen mittels eines Übergangsteils (22) mit dem Kopfteil (12) verbundenen Schaftteil (14) umfaßt,
der Kopfteil (12) als Ringschlauch (16) ausgebildet ist, der eine Einführöffnung (18) für die Zitze (Z) bildet,
**dadurch gekennzeichnet, daß**
der Ringschlauch (16) so ausgebildet ist, daß bei in den Schaftteil (14) eingeführter Zitze ein ringförmiger Hohlraum (30) durch die Zitze, den Übergangsteil (22) und den Ringschlauch (16) begrenzt ist,
die lichte Weite der Einführöffnung (18) des Ringschlauchs (16) kleiner als die maximale lichte Weite des Schaftteils (14) ist und
der Ringschlauch (16) derart elastisch ist, daß die lichte Weite seiner Einführöffnung (18) beim Einführen der Zitze nach radial außen vergrößerbar ist und daß dabei seine axiale Länge veränderbar ist.

2. Zitzengummi nach Anspruch 1, **dadurch gekennzeichnet, daß** der Ringschlauch (16) radial außen eine Einschnürung (17) sowie radial innen eine Einschnürung (19) aufweist, die in einer zur Langsachse des Zitzengummis (10) im wesentlichen senkrechten Ebene in Umfangsrichtung des Ringschlauchs (16) verlaufen.

3. Zitzengummi nach Anspruch 1 oder 2, **dadurch gekennzeichnet, daß** der Kopfteil (12) radial außen im Bereich des der Einführöffnung (18) zugewandten Endes des Übergangsteils (22) eine Aussparung (13) aufweist, die in einer zur Längsachse des Zitzengummis (10) im wesentlichen senkrechten Ebene in Umfangsrichtung des Ringschlauchs (16) verläuft.

4. Zitzengummi nach einem der vorhergehenden Ansprüche, **dadurch gekennzeichnet, daß** der Ringschlauch (16) radial innen mindestens eine Rippe (32, 33, 34) aufweist, die in einer zur Längsachse des Zitzengummis (10) im wesentlichen senkrechten Ebene in Umfangsrichtung des Ringschlauchs (16) verläuft.

5. Zitzengummi nach einem der vorhergehenden Ansprüche, **dadurch gekennzeichnet, daß** der Ringschlauch (16) geschlossen und mit einem Gas, einer Flüssigkeit oder einer gelartigen, schaumartigen oder anderen viskosen Masse gefüllt ist.

6. Zitzengummi nach Anspruch 5, **dadurch gekennzeichnet, daß** der Ringschlauch (16) mit einer Öffnung (50) versehen ist, über die er an eine Druckquelle anschließbar oder befüllbar ist.

7. Zitzengummi nach einem der vorhergehenden Ansprüche, **dadurch gekennzeichnet, daß** die Wand des Ringschlauchs (16) im Bereich des der Einführöffnung (18) zugewandten Endes des Übergangsteils (22) über den gesamten Umfang des Ringschlauchs (16) durchbrochen ist, wobei das radial äußere Ende (45) der Wand an das radial innere Ende (44) der Wand unter Abdichtung des im Ringschlauch (16) gebildeten Innenraums (15) anlegbar ist und sich in einem Ansatz (36) fortsetzt, der so ausgebildet ist, daß er das der Einführöffnung (18) zugewandte Ende der Melkbecherhülse (40) zumindest über einen Teil von deren axialer Länge umschließen kann.

8. Zitzengummi nach Anspruch 7, **dadurch gekennzeichnet, daß** der Ansatz (36) in verschiedenen Axialpositionen an der Melkbecherhülse (40) festlegbar ist.

9. Zitzengummi nach einem der vorhergehenden Ansprüche, **dadurch gekennzeichnet, daß** der Ringschlauch (16) durch mindestens eine in einer zur Längsachse des Zitzengummis (10) im wesentlichen senkrechten Ebene verlaufende Zwischenwand (54) in axial gegeneinander versetzte Schlauchabschnitte (56, 58) unterteilt ist.

10. Zitzengummi nach einem der Ansprüche 1 bis 9, **dadurch gekennzeichnet, daß** ein Schlauch (60) im Ringschlauch (16) angeordnet ist.

## Claims

1. A liner for use with a substantially undeformable teatcup shell (40), for forming a two-chambered teatcup, by means of which milk is extracted from a teat (Z) in a suction milking process through a milking vacuum provided during a milking phase, and the teat is massaged during a rest phase, wherein
the liner comprises a head part (12) that is substantially rotationally symmetrical relative to Its longitudinal axis and a barrel part (14) that is connected to the head part (12) by means of a transitional part (22),
the head part (12) is formed as an annular tube (16), which forms an insertion opening (18) for the teat (Z),
**characterized in that**
the annular tube (16) is configured such that an annular hollow space (30) is defined by the teat, the transitional part (22) and the annular tube (16) once the teat is introduced into the barrel part (14),
the Inner width of the insertion opening (18) of the annular tube (16) is smaller than the maximum inner width of the barrel part (14), and
the annular tube (18) is sufficiently flexible that the inner width of its insertion opening (18) is enlargeable radially outward and its axial length Is changeable during introduction of the teat.

2. The liner according to claim 1, **characterized in that** the annular tube (16) has a constriction (17) at its radially outer side and a constriction (19) at its radially Inner side which are disposed in the circumferential direction of the annular tube (16) in a plane substantially orthogonal to the longitudinal axis of the liner (10).

3. The liner according to claim 1 or 2, **characterized in that** the head part (12), at its radially outer side in the region of the end of the transitional part (22) facing the Insertion opening (18), has a recess (13) which is disposed in the circumferential direction of the annular tube (16) In a plane substantially orthogonal to the longitudinal axis of the liner (10).

4. The liner according to any of the preceding claims, **characterized in that** the annular tube (16), at its radially inner side, has at least one rib (32, 33, 34) which is disposed in the circumferential direction of the annular tube (16) in a plane substantially orthogonal to the longitudinal axis of the liner (10).

5. The liner according to any of the preceding claims, **characterized in that** the annular tube (16) is closed and is filled with one of a gas, a liquid or a gel-like, foam-like or another viscous material.

6. The liner according to claim 5, **characterized in that** the annular tube (16) is provided with an opening (50) through which it may be filled or connected to a pressure source.

7. The liner according to any of the preceding claims, **characterized in that** the wall of the annular tube (16), in the region of the end of the transitional part (22) facing the insertion opening (18), is discontinuous over the whole circumference of the annular tube (16), wherein the radially outer end (45) of the wall may be positioned in contact with the radially Inner end (44) of the wall while seallng the interior (15) formed In the annular tube (16), and wherein the radially outer end (45) is continued In a protrusion (36) which is shaped such that it can surround the end of the teatcup shell (40) facing the insertion opening (18) over at least a portion of the axial length of the teatcup shell.

8. The liner according to claim 7, **characterized in that** the protrusion (36) is attachable to the teatcup shell (40) in different axial positions.

9. The liner according to any of the preceding claims, **characterized in that** the annular tube (16) Is subdivided by at least one partition wall (54) which is disposed in a plane substantially orthogonal to the longitudinal axis of the liner (10), into tube portions (56, 58) which are displaced axially with respect to each other.

10. The liner according to any of claims 1 to 9, **characterized in that** a tube (60) is disposed In the annular tube (16).

## Revendications

1. Caoutchouc pour trayon pour un gobelet trayeur (40) sensiblement indéformable, destiné à former un gobelet de traite à deux chambres, avec lequel le lait est trait d'un trayon (Z) au cours du processus de traite par aspiration par un vide de traite dans la phase d'aspiration et le trayon est massé au cours de la phase de détente,
le caoutchouc pour trayon comportant une partie de tête (12) sensiblement à symétrie de révolution par rapport à son axe longitudinal ainsi qu'une partie de tige (14) reliée à la partie de tête (12) au moyen d'une partie de raccordement (22),
la partie de tête (12) étant conçue ou réalisée comme un tuyau annulaire (16) qui forme un orifice d'introduction (18) pour le trayon (Z),
**caractérisé en ce que**
le tuyau annulaire (16) est conçu ou réalisé de sorte que lorsque le trayon est introduit dans la partie de tige (14), une cavité annulaire (30) est délimitée par le trayon, par la partie de raccordement (22) et le tuyau annulaire (16),
la largeur intérieure de l'orifice d'introduction (18) du tuyau annulaire (16) est inférieure à la largeur intérieure maximale de la partie de tige (14) et
le tuyau annulaire (16) est élastique, de telle sorte que la largeur intérieure de son orifice d'introduction (18), lorsque le trayon est introduit, peut être agrandie radialement vers l'extérieur et que dans ce cas, sa longueur axiale peut être modifiée.

2. Caoutchouc pour trayon selon la revendication 1, **caractérisé en ce que** le tuyau annulaire (16) comprend radialement à l'extérieur un rétrécissement (17) ainsi que radialement à l'intéricur un rétrécissement (19), qui s'étendent dans la direction périphérique du tuyau annulaire (16) dans un plan sensiblement perpendiculairement à l'axe longitudinal du caoutchouc pour trayon (16).

3. Caoutchouc pour trayon selon la revendication 1 ou 2, **caractérisé en ce que** la partie de tête (12) comprend radialement à l'extérieur dans la zone de l'extrémité de la partie de raccordement (22) tournée ou dirigée vers l'orifice d'introduction (18) un évidement (13), qui s'étend dans la direction périphérique du tuyau annulaire (16) dans un plan sensiblement perpendiculairement à l'axe longitudinal du caoutchouc pour trayon (10).

4. Caoutchouc pour trayon selon l'une quelconque des revendications précédentes, **caractérisé en ce que** le tuyau annulaire (16) comprend radialement à l'intérieur au moins une nervure (32, 33, 34) qui s'étend dans la direction périphérique du tuyau annulaire (16) dans un plan sensiblement perpendiculaire à l'axe longitudinal du caoutchouc pour trayon (10).

5. Caoutchouc pour trayon selon l'une quelconque des revendications précédentes, **caractérisé en ce que** le tuyau annulaire (16) est fermé et rempli d'un gaz, d'un liquide ou d'une masse gélatineuse, mousseuse ou autre masse visqueuse.

6. Caoutchouc pour trayon selon la revendication 5, **caractérisé en ce que** le tuyau annulaire (16) est pourvu d'un orifice (50) par l'intermédiaire duquel il peut être raccordé à une source de pression ou rempli.

7. Caoutchouc pour trayon selon l'une quelconque des revendications précédentes, **caractérisé en ce que** la paroi du tuyau annulaire (16) est perforée sur toute la périphérie du tuyau annulaire (16) dans la zone de l'extrémité de la partie de raccordement (22) tournée ou dirigée vers l'orifice d'introduction (18), l'extrémité radialement extérieure (45) de la paroi pouvant être posée contre l'extrémité radialement intérieure (44) de la paroi en étanchéifiant l'espace interne (15) formé dans le tuyau annulaire (16) et se prolongeant dans un épaulement(36), qui est réalisé de sorte qu'il peut entourer l'extrémité du gobelet trayeur (40) tournée ou dirigée vers l'orifice d'introduction (18) au moins sur une partie de sa longueur axiale.

8. Caoutchouc pour trayon selon la revendication 7, **caractérisé en ce que** l'épaulement (36) peut être fixé dans différentes positions axiales sur ou au niveau du gobelet trayeur (40).

9. Caoutchouc pour trayon selon l'une quelconque des revendications précédentes, **caractérisé en ce que** le tuyau annulaire (16) est divisé en sections de tuyau (56, 58) mutuellement décalées dans le sens axial par au moins une cloison (54) s'étendant dans un plan sensiblement perpendiculaire à l'axe longitudinal du caoutchouc pour trayon (10).

10. Caoutchouc pour trayon selon l'une quelconque des revendications 1 à 9, **caractérisé en ce qu'**un tuyau (60) est disposé dans le tuyau annulaire (16).
